# EUROPEAN PATENT SPECIFICATION

(11) **EP 0 720 816 B1**
(45) Date of publication and mention of the grant of the patent: **27.10.1999**
(21) Application number: 96300086.4
(22) Date of filing: 04.01.1996
(51) Int. Cl.: A22C 11/00, A23P 1/12

(54) **Method of manufacturing a food product**
Verfahren zur Herstellung eines Nahrungsprodukt
Procédé pour la fabrication d'un produit alimentaire

(30) Priority: 04.01.1995 EP 95300035
(43) Date of publication of application: 10.07.1996
(73) Proprietor: UNILEVER PLC, London EC4P 4BQ (GB); UNILEVER N.V., 3013 AL Rotterdam (NL)
(72) Inventor: Bohlmeijer, Frits Peter, 5351 PN Berghem (NL); Harbers, Antonius Hermanus Maria, 3737 AG Groenekan (NL); Nijhuis, Eric Hermanus Bernardus, 5052 RB Goirle (NL)
(74) Representative: Sikken, Antonius H. J. M.

(56) References cited:
- EP-A- 0 183 153
- FR-A- 2 221 081
- FR-A- 2 419 680
- GB-A- 1 232 801
- GB-A- 2 156 727
- US-A- 2 115 607
- US-A- 4 501 542

## Description

### Technical Field of Invention

The invention relates to a method of manufacturing sausages.

### Background & Prior Art

Traditional sausages were made by stuffing sausage meat into natural casings. Such sausages had the advantage of a natural appearance, however, processes used to manufacture the sausages are highly inefficient and the products are not uniform because the diameter of such natural casings are not uniform.

A number of processes have therefore been developed which allow the continuous production of uniform sausages.

The first such process is the extrusion of a meat dough into an artificial casing. The sausages are then dried before removal of the casing.

The second such process, known as Algin co-extrusion, provides a particularly convenient and efficient process for producing sausages having a uniform diameter. Algin co-extrusion is described in GB 1 232 801.

Algin co-extrusion involves extruding a collagen dough in tubular form upon a foodstuff. The collagen coating so formed is stabilised. Preferably the sausage meat of other extrudable foodstuff is shaped to receive the collagen by extrusion simultaneously with it.

The third such process is described in GB 1 441 494. An edible acid is introduced onto a meat emulsion before it is passed through an extrusion tube. The edible acid reacts with protein in the meat or meat-like material to form a cohesive skin-like surface on the product as it is extruded. The acid may be introduced through a scintered metal filter.

An alternative process is described in EP 528 575. Meat dough is extruded and treated to have a proteinaceous skin made by congealing surface dough material with a treating arrangement. This treating arrangement can be contact of the dough with an acidic composition. The dough is then severed into a plurality of blanks, followed by forming unfinished ends of blanks into shaped links. The shaped links are then cooked and typically packaged as desired to provide a finished sausage product.

The common elements between all these processes is that:
(a) the meat dough is extruded; and
(b) the extruded dough is provided with a skin (casing).

These features which constitute the preamble of Claim 1 are in particular known from FR-A-2 419 680.

A problem commonly experienced with sausages formed by extrusion is that they burst during subsequent heating processes (eg. drying, cooking). This is because the collagen fibres present in the meat dough tend to align themselves to the direction of flow during extrusion. The subsequent heating process causes shrinkage of the collagen fibres, resulting in pressure being exerted on the sides of the sausages. To avoid this undesirable shrinkage of the fibres, the fibres are randomised during the extrusion process. This is achieved by forcing the dough through a restricted area or venturi located in the extrusion mouthpiece.

Although this modification has solved the problem of sausages bursting, it has exacerbated a second problem. Sausages formed by extrusion are perfectly straight. It is clearly desirable to be able to manufacture more natural shaped sausages, ie. curved sausages, either for sale as such or for further processing into U-shaped sausage products.

Currently only U-shaped sausages having a certain minimum thickness can be manufactured from extruded sausage meat dough. These sausages are shaped mechanically and must be packaged and handled specifically so that the shape is retained. It is virtually impossible with known extrusion techniques to make miniature U-shaped sausages because the shape cannot be maintained during the further processing of the sausage, eg. drying.

We have now solved these above-mentioned problems by use of a modified extrusion technique.

### Description of the Invention

Accordingly the invention provides a process for the manufacture of a sausage product comprising:
(a) co-extruding at least two meat doughs; and
(b) providing the co-extruded dough with a skin
characterised in that at least one meat dough is extruded through a venturi such that the fibres are randomised and at least one meat dough is extruded such that the fibres are substantially aligned and are provided in a segment of the cross-section of the sausage product.

Sausages manufactured by the above process will therefore experience selective shrinkage of the collagen fibres during a subsequent heating process in the dough which has been extruded without randomisation of the fibres. This will result in the sausage forming a curved structure. The sausage can then, if desired, be further curved into, for example, a U-shape. The sausage is preferably formed with a U-shape as soon as possible after extrusion (ie. before drying).

Preferably two meat doughs are co-extruded, one meat dough being extruded through a venturi such that the fibres are randomised and the other meat dough being extruded such that the fibres are allowed to align to the direction of flow.

Preferably the doughs are extruded such that the ratio of meat dough having randomised fibres to meat dough having aligned fibres is from 9:4 to 37:4, most preferably from 4:1 to 5:1.

The co-extrusion will most conveniently be carried out through a single extrusion mouthpiece, the mouthpiece being divided to permit the dough to be segregated, at least one dough section being extruded through a part of the mouthpiece which has been provided with a venturi, and at least one dough section being extruded through a part of the mouthpiece having no venturi.

Preferably the meat doughs have the same composition.

Any meat is suitable for use, for example the meat may be selected from beef, port, lamb and mixtures thereof.

The skin may be provided by any suitable process, for example, the skin may be provided by a process selected from extruding into an artificial casing, algin co-extrusion and treatment of the meat dough with an acidic composition to form a proteinaceous skin.

In Algin co-extrusion, a collagen dough is extruded in tubular form upon a foodstuff.

Preferably the collagen coating formed is subjected during extrusion to frictional forces acting in a direction about the axis of extrusion. The frictional forces are conveniently applied by relative rotational movement between inner and outer members of a die through which the collagen dough is being extruded. Preferably the movement is provided by rotation of the inner and outer members of the die in opposite senses. Further information is provided in GB 1 232 801 incorporated herein by reference.

The collagen can be set by methods known in themselves in the preparation of artificial sausage casing. Conveniently extrusion takes place into a setting bath, containing for example common salt brine. Under the influence of the setting solution the collagen is coagulated, precipitated or set in contact with the extruded foodstuff and the formed length of coated foodstuff then emerges from a bath to undergo any further process steps required. Stabilisation may however be by other means.

The setting solution preferably contains a salt for example common salt brine 50 to 100% saturated, preferably over 75% saturated. It may, when an acid swollen dough is used, also contain sufficient ammonia to be about N/10 with respect to ammonium hydroxide; the pH of such a solution is between 10 and 12. The action of the setting bath by withdrawal of water is then assisted by neutralisation of the acid, indeed setting is possible by neutralisation alone. Other setting solutions, for example ammonium sulphate solution, are suitable but not preferred since washing to remove material taken up in the bath may be necessary. Other salts also are suitable, provided they are not taken up by the product in amounts which effect its edibility and cannot, if necessary, be removed. Non-toxic salts are for example sodium sulphate, di-sodium hydrogen phosphate, trisodium phosphate, trisodium citrate and corresponding potassium salts. There are also organic-solvent setting liquids, for example methanol/ammonia. A setting bath is conveniently used and the required depth, found by simple experiment, varies according to the time required to impart the necessary strength to the collagen, and accordingly also with the extrusion speed. At an extrusion speed of 12 cm/sec a setting bath depth of 30 cm is sufficient, giving a residence time of 2.4 seconds. Shorter residence times are possible however and in any case the setting solution continues to act during the draining that takes place after the product has left the bath. The dough is extruded at a speed consistent with the rate of extrusion of the foodstuff, generally at the same speed. If desired however the foodstuff, sausage meat for example, can be extruded slightly faster than the dough, to give some draw-down, that is to say stretching and if required narrowing of the extruded collagen.

The chosen rate of extrusion can vary over a considerable range, from rates as low as 2.5 cm/sec up to 50 cm/sec or more, preferably up to 22 cm/sec or more. The thickness of the coating at a given rate of extrusion of the foodstuff can be varied by varying the volume rate at which the collagen dough is extruded. The corresponding thickness of the coating is not easy to measure because of the combination with the foodstuff that takes place and the softness and flexibility of the coating but is for example ordinarily about 0.1 mm after drying to approximately 40% water content. The actual thickness of the collagen coating depends on the size of the gap through which the collagen dough is extruded and on the volume rate of extrusion. Suitable rates for products are readily found by simple trial. It is a considerable advantage that only about 60% of the collagen required to make a corresponding length of artificial casing need be used, and this is on top of the saving in avoiding twist linking. The actual extrusion pressure is chosen according to the plant in use; pressure of 80 to 120 p.s.i. (5.5 to 8.5 kg/sq cm) are for example suitable with a stuffer of the kind used for sausage meat.

The temperature of the setting solution can be ordinary ambient factory temperature, say 15° to 25°C. The temperature of the dough should be from 0 to 8°C. Low temperatures may however increase the viscosity of the dough without compensating advantage, while higher ones may have a bad effect on the collagen. A temperature of 20°C is preferably not exceeded, since higher temperatures may deleteriously affect the properties of the collagen. The extruder itself is preferably a contra-rotating die extruder, particularly one having contra-rotating cones between which the dough passes, as described below. The preferred gap between the cones is 0.35 to 0.5 mm, but other gaps, for example between 0.25 to 0.60 mm can be used. The ratio of the speed of the cones is preferably between 0.66 and 0.88. Various speeds of rotation can be used, for example 60 to 120 rpm. If only one cone is rotated its speed should be higher, preferably high enough to give the same relative speed of 120 to 240 rpm, for example 155 rpm.

Formation of the skin by treatment of the meat dough with an acid composition is described in GB 1 441 494, with an alternative process described in EP 528 575. These references are incorporated herein.

The acid composition may comprise acids, liquid smoke, water and/or curing chemicals. Any acid material which will react with the protein material of the product being prepared to form a cohesive skin like surface thereon is suitable. Both organic and inorganic edible acid materials can be employed. Suitable acids include acetic acid, ascorbic acid, citric acid, fumaric acid, malic acid, hydrochloric acid and phosphoric acid.

The foodstuff may be cut into individual portions shortly after provision of the casing/skin or it may be further processed as a continuous length and cut later. The length of the sausage is preferably 'crimped' or otherwise shaped by pushing aside the sausage meat within the casing to define individual sausages directly after extrusion and provision of the skin, that is to say before any drying.

The process steps subsequent to the provision of the skin or casing may be varied as required. Usually the product will require drying and/or other steps such as, for example, tanning using such agents as formaldehyde, liquid smoke extracts, alum and dialdehyde alginic acid. The production of this last agent is described in GB 1,109,509.

The drying conditions may vary but at an air temperature of 50 to 95°C and an absolute humidity of up to about 0.012 (12g water per kg dry air), an air speed of 5 to 15 m/sec is suitable. Such an air speed gives drying in a sufficiently short time for the length of drying conveyor necessary to be manageable, using ambient air, but if the air is warmed lower speeds, for example down to 1.5 m/sec may be used. Further advantages may be gained by dehumidifying the air.

The progress of the drying of sausages may be followed by attempting to remove the coating or casing. Drying has reached an acceptable degree when the casing can be no longer removed cleanly but brings the meat with it. It is however desirable to dry further. The moisture content of the coating after leaving the setting solution is generally some 80 or 85%. Drying is preferably carried out until a 50% moisture content, and advantageously until a 40% moisture content, is reached. During equilibrium of moisture content between foodstuff (sausage meat) and coating the moisture content rises again, to some 65 to 75%.

The actual residence time required in the drier is determined by simple experiment on the equipment in use and is a function of air velocity, temperature, humidity, and product size. A typical range of times for sausages is however 5 to 30 minutes.

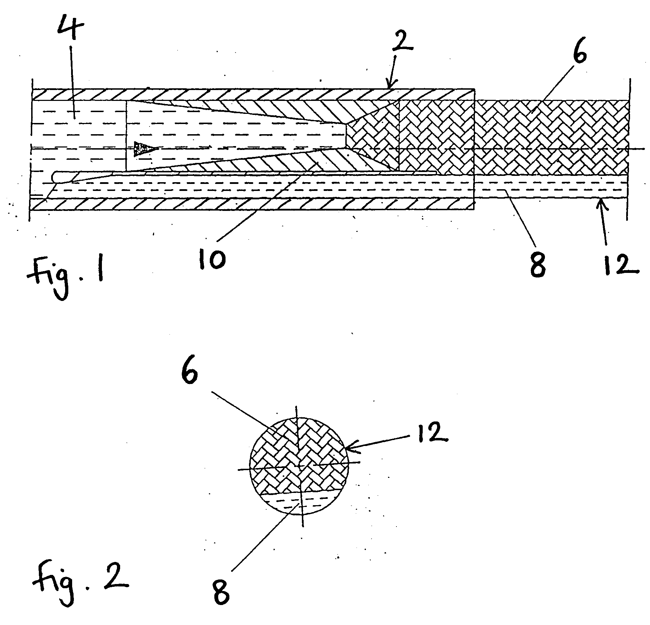

An extrusion mouthpiece and an extruded sausage are illustrated, by way of example only, in Figures 1 and 2.
Figure 1 shows a cross-sectional view along the longitudinal axis of an extrusion mouthpiece 2 which contains non-extruded meat dough 4, extruded meat dough 6 having randomised fibres and extruded meat dough 8 having substantially aligned fibres. The mouthpiece is divided such that a part of it is provided with a venturi 10. The meat dough extruded through the venturi results in randomisation of its fibres.
Figure 2 shows a cross-sectional view of an extruded sausage 12, in a direction perpendicular to its longitudinal axis. It can be seen that the substantially aligned fibres are provided in a segment of this circular cross-section of the sausage. During subsequent heating of the sausage, the aligned part will shrink more along its length than the randomised part, resulting in a curved sausage.

### Examples

### Example 1

A collagen Dough was prepared by the procedure described in GB 1,232,801 having the following composition;

| | |
|---|---|
| Solids Content | 5.0 - 7.4% |
| Protein | 3.8 - 4.2% |
| Lactic Acid | 1.0 - 2.5% |
| Acetic Acid | 0.7 - 2.0% |

The following sausage meat dough mix was prepared;

| | |
|---|---|
| Pork Trimmings | 61% |
| Pork False Lean | 13% |
| Water/Ice | 8% |
| Pork Rind | 4% |
| Salt | 2% |

Co-extrusion was then carried out as described above, the meat dough being supplied to the die at 72-101 psi (5-7 bar) at a volume rate of extrusion >14.6 kg/min, and a rate of extrusion of >15m sausage/min. The ratio of the rotating speed of the cones was from 0.66 to 0.88 and the size of the (collagen) gap between the rotating cones was from 0.3 to 0.5mm.

The setting solution contained saturated salt brine at 15°C.

The sausage produced had a diameter of 12.3mm. The mouthpiece used was such that the surface area of the aligned area of dough was 23.2mm² and the surface area of the randomised dough was 109.5mm²C.

The sausages were treated with liquid smoke at a temperature of 55°C. Sausages having a natural, curved shape were produced, the shape being maintained during subsequent processing.

### Example 2

A collagen dough according to example 1 and a sausage dough according to example 1 were prepared.

Co-extrusion was carried out, the meat dough being supplied to the die at 72-101 psi (5-7 bar) at a volume rate of extrusion >14.6 kg/min, and a rate of extrusion of >8 m sausage/min. The ratio of the rotating speed of the cones was according to example 1 and the size of the gap between the rotating cones also.

The setting solution contained saturated salt brine at 15°C.

The sausage produced had a diameter of 20 mm. The mouthpiece used was such that the surface area of the aligned area of dough was 44 mm² and the surface area of the randomised dough was 210.5 mm². The sausages were treated with liquid smoke at a temperature of 55°C. Sausages having a natural, curved shape were produced, the shape being maintained during subsequent processing.

## Claims

1. A process for the manufacture of a sausage product comprising:
(a) co-extruding at least two meat doughs; and
(b) providing the co-extruded dough with a skin
characterised in that at least one meat dough is extruded through a venturi such that the fibres are randomised and at least one meat dough is extruded such that the fibres are substantially aligned and are provided in a segment of the cross-section of the sausage product.

2. A process according to claim 1 wherein two meat doughs are co-extruded.

3. A process according to claim 1 or 2 wherein the ratio of meat dough having randomised fibres to meat dough having aligned fibres is from 9:4 to 37:4.

4. A process according to any preceding claim wherein the ratio of meat dough having randomised fibres to meat dough having aligned fibres is from 4:1 to 5:1.

5. A process according to any preceding claim wherein the meat doughs have the same composition.

6. A process according to any preceding claim wherein the skin is provided by a process selected from the group consisting of extrusion into an artificial casing, algin co-extrusion and treatment of the meat dough with an acidic composition to form a proteinaceous skin.

## Patentansprüche

1. Verfahren zur Herstellung eines Wurstprodukts, umfassend:
(a) Coextrudieren von mindestens zwei Fleischmassen, und
(b) Versehen der coextrudierten Masse mit einer Haut,
dadurch gekennzeichnet, daß mindestens eine Fleischmasse derart durch eine Venturi-Düse extrudiert wird, daß die Fasern zufällig angeordnet werden, und mindestens eine Fleischmasse derart extrudiert wird, daß die Fasern im wesentlichen geordnet werden, und in einem Querschnittsabschnitt des Wurstprodukts vorliegen.

2. Verfahren nach Anspruch 1, worin zwei Fleischmassen coextrudiert werden.

3. Verfahren nach Anspruch 1 oder 2, worin das Verhältnis der Fleischmasse mit zufällig angeordneten Fasern zur Fleischmasse mit geordneten Fasern 9:4 bis 37:4 beträgt.

4. Verfahren nach mindestens einem der vorhergehenden Ansprüche, worin das Verhältnis der Fleischmasse mit zufällig angeordneten Fasern zur Fleischmasse mit geordneten Fasern 4:1 bis 5:1 beträgt.

5. Verfahren nach mindestens einem der vorhergehenden Ansprüche, worin die Fleischmassen dieselbe Zusammensetzung aufweisen.

6. Verfahren nach mindestens einem der vorhergehenden Ansprüche, worin die Haut durch ein Verfahren bereitgestellt wird, das aus der aus Extrusion in ein künstliches Gehäuse, Algin-Coextrusion und Behandlung der Fleischmasse mit einer sauren Zusammensetzung, um eine proteinhaltige Haut zu bilden, ausgewählten Gruppe besteht.

## Revendications

1. Procédé de fabrication d'une saucisse comportant les étapes consistant à :
(a) co-extruder au moins deux pâtes de viande, et
(b) munir la pâte co-extrudée d'une peau
caractérisé en ce qu'au moins une pâte de viande est extrudée à travers un venturi de sorte que les fibres sont disposées de manière aléatoire et au moins une pâte de viande est extrudée de sorte que les fibres sont pratiquement alignées, et sont agencées dans un segment de la coupe transversale de la saucisse.

2. Procédé selon la revendication 1, dans lequel deux pâtes de viande sont co-extrudées.

3. Procédé selon la revendication 1 ou 2, dans lequel le rapport entre la pâte de viande ayant des fibres disposées de manière aléatoire et la pâte de viande ayant des fibres alignées est compris entre 9:4 et 37:4.

4. Procédé selon l'une quelconque des revendications précédentes, dans lequel le rapport entre la pâte de viande ayant des fibres disposées de manière aléatoire et la pâte de viande ayant des fibres alignées est compris entre 4:1 et 5:1.

5. Procédé selon l'une quelconque des revendications précédentes, dans lequel les pâtes de viande ont la même composition.

6. Procédé selon l'une quelconque des revendications précédentes, dans lequel la peau est agencée par un procédé sélectionné parmi le groupe constitué d'une extrusion d'une enveloppe artificielle, d'une co-extrusion d'algine et d'un-traitement de la pâte de viande à l'aide d'une composition acide pour former une peau protéinique.
